# EUROPEAN PATENT SPECIFICATION

(11) **EP 2 258 209 B1**
(45) Date of publication and mention of the grant of the patent: **24.06.2015**
(21) Application number: 10180655.2
(22) Date of filing: 27.09.2005
(51) Int. Cl.: A23K 1/00, A23K 1/165

(54) **Phytase granules in animal feeds**
Phytasegranulate in der Tierernährung
Granules de phytase dans les aliments pour animaux

(30) Priority: 27.09.2004 DK 200401465
(43) Date of publication of application: 08.12.2010
(62) Divisional of application: 09171238.0
(73) Proprietor: Novozymes A/S, 2880 Bagsvaerd (DK)
(72) Inventor: Marcussen, Erik Schmidt, 2750, Ballerup (DK); Borup, Flemming, 21873, Tygelsjoe (SE); Simonsen, Ole, 2860, Soeborg (DK); Markussen, Erik Kjaer, 3500, Vaerloese (DK)
(74) Representative: Garde, Charlotte Kammer

(56) References cited:
- WO-A1-97/16076
- WO-A1-03/055967
- US-A1- 2002 160 927

## Description

### FIELD OF THE INVENTION

The present invention which is defined by the claims relates to steam treated pelletized feed compositions comprising salt coated granules. The invention further relates to the use of salt coated granules for steam-treated pelletized feed compositions.

### BACKGROUND OF THE INVENTION

In the art concerning animal feed it is a well known fact that pelleting of feed is a desideratum, as pelleting of feed increases the digestibility of especially the starch fraction of the feed. Further-more, pelleting offeed reduces dust problems. It makes the feed easier to eat for the birds, and it makes it possible to incorporate small amounts of ingredients in the feed and to "lock" the feed mixture. In the process of producing feed pellets it is considered necessary to steam treat the feed pellets in order to kill Salmonella bacteria if present, whereby a steam treatment to around 80°C is appropriate. Active compounds present in the feed pellets such as enzymes are not stable at this high temperature, and thus, a large surplus of enzymes has to be used, or enzyme free feed components are pelletized and steam treated, where after an enzyme containing slurry or solution is coated on the steam treated pellets. However, this coating is cumbersome and is often not compatible with existing plants. An attempt to obtain improved enzyme granules for feed is found in WO 92/12645. WO 92/12645 describes T-granules, which are coated with a fat or a wax, and feed components which are steam treated and subsequently pelletized. By this invention it was possible to heat treat the granules comprising enzymes and avoid the cumber-some coating with enzymes after the heat treatment The use of wax coated T-granules was a significant improvement in this field as it was possible to maintain an acceptable enzyme activity during steam pelleting. But the industry still demand improved enzyme activity after steam pelleting. Furthermore there is a demand for small enzyme granules that also oomprise a significant amount of active enzyme after pelleting, for production of feed for broiler chickens. It makes it much easier to control the amount of enzyme in the feed pellets if small enzyme granules are used. Broiler chickens only eat few pellets per day and are believed to get a more homogenous enzyme intake if small enzyme granules are used in the manufacturing of the feed pellets. It is easier to solve this demand with the granules of the present invention compared with known enzyme granules on the market today.

WO 97/16076 also describes the use of wax coatings in steam pelleted phytase granules.

The present invention solves said demands by coating an enzyme containing granule with a salt before steam pelleting. It has shown that it is possible to steam treat salt coated granules comprising an active compound and maintain a significant amount of activity.

The use of salt coatings in enzyme granulation is known from WO 00/01793 were it was found that salt coatings improve storage stability of enzyme granules for detergents.

### SUMMARY OF THE INVENTION

One object of the present invention is to provide steam treated pelletized feed compositions with a significant amount of activity. A second object of the present invention is to provide granules comprising an active compound which retain a significant amount of activity despite steam pelleting.

It has surprisingly been found that granules comprising active compounds like enzymes, when coated with a salt, are particularly good in the manufacture of steam treated pelletized feed as they retain a significant amount of activity despite the steam treatment. It has further shown that even with small granule sizes it has been possible to retain an acceptable amount of activity.

According to the invention, there is provided a method as defined in the appended Claim 1, a feed composition as defined in the appended Claim 10 and a use as defined in the appended Claim 11.

### DETAILED DESCRIPTION OF THE INVENTION

### Definitions

### Solution:

A solution is defined as a homogeneous mixture of two or more substances.
Suspension:
   A suspension is defined as fine particles suspended in a fluid.
Particle size:
   By particle size of the granule is meant the mass mean diameter of the granules.
   %RH:
      The term "% RH" is in the context of the invention to be understood as the relative humidity of air. 100% RH is air saturated with water moisture at a fixed temperature and % RH thus reflects the percent moisture saturation of the air.
Constant humidity:
   The term "constant humidity" (in the context of the invention sometimes abbreviated as CH) of a compound or substance is to be understood as the % RH of atmospheric air in equilibrium with a saturated aqueous solution of said compound in contact with the solid phase of said compound, all confined within a closed space at a given temperature. This definition is in accordance with *"*Handbook of chemistry and physics" CRC Press, Inc., Cleveland, USA, 58th edition, p E46, 1977-1978. Accordingly CH_{20°C} =50% for a compound means that air with a 50% humidity will be in equilibrium with a saturated aqueous solution of the compound at 20°C. Accordingly the term constant humidity is a measure of the hygroscopic properties of a compound.

### Introduction

We have surprisingly found it possible to increase the stability of an active compound comprised in granules during steam pelleting by applying a salt coating to the granules before the steam treatment. This means that we can improve the stability of active compounds comprised in feed compositions which get exposed to steam treatment during pelleting.

We have furthermore found it possible to prepare small granules comprising active compounds which retain acceptable activity levels despite steam treatment by coating with a salt.

Besides these surprising advantages the salt coating has shown to provide good dust values and increase the storage stability of feed granules compared to known wax coated granules. Furthermore a salt coating can act as a solubility regulator.

### The granule

When referring to the granule of the present invention it can either be a single granule or several granules.

The granule of the present invention which is particularly well suited for steam pelleting and as part of a steam treated pelletized feed composition, comprises a core and at least one coating. The core comprises an active compound and the coating comprises a salt.

The particle size of the granules to be used in feed pellets is normally more than 700 µm, more particular. 700-1000 µm. Suitable particle sizes of the granule of the present invention is found to be 50-2000 µm, more particular 100-1000 µm. We have found it possible to prepare particularly small feed granules for pelleting by coating the granules with a salt coating. The granule of the present invention may in a particular embodiment have a particle size below 700 µm. In another particular embodiment of the present invention the particle size of the finished granule is 100-600 µm. In a more particular embodiment of the present invention the particle size of the finished granule is 200-400 µm. In an even more particular embodiment of the present invention the particle size is 210-390 µm. In a most particular embodiment of the present invention the particle size of the finished granule is below 400 µm. In another most particular embodiment the particle size of the granules of the present invention is above 250 µm and below 350 µm.

In a particular embodiment of the present invention the particle size of the granule of the present invention is below 400 µm.

In a particular embodiment of the present invention the granules of the steam treated pelletized feed composition have a particle size below 400 µm.

In a particular embodiment of the present invention the granules to be used for steam treated pelletized feed compositions have a particle size below 400 µm.

In a particular embodiment of the present invention the particle size of the granule of the present invention is between 210 and 390 µm.

In a particular embodiment of the present invention the particle size of the granule of the steam treated pelletized feed composition is between 210 and 390 µm.

In a particular embodiment of the present invention the size of the granules to be used for steam treated pelletized feed compositions is between 210 and 390 µm.

### The Core

The core comprises an active compound in the form of concentrated dry matter.

The core can either be
1. a homogeneous blend of an active compound,
   or
2. an inert particle with an active compound applied onto it,
   or
3. a homogenous blend of an active compound and optionally materials which act as binders which is coated with an active compound.

The core particle of the present invention is in a particular embodiment 20-800 µm. In a more particular embodiment of the present invention the core particle size is 50-500 µm. In an even more particular embodiment of the present invention the core particle size is 100-300 µm. In a most particular embodiment of the present invention the core particle size is 150-250 µm.

### Inert particle:

The inert particle may be water soluble or water insoluble, e.g. starch, e.g. in the form of cassava or wheat; or a sugar (such as sucrose or lactose), or a salt (such as sodium chloride or

sodium sulphate). Suitable inert particle materials of the present invention include inorganic salts, sugars, sugar alcohols, small organic molecules such as organic acids or salts, minerals such as clays or silicates or a combination of two or more of these.

Inert particles can be produced by a variety of granulation techniques including: crystallisation, precipitation, pan-coating, fluid bed coating, fluid bed agglomeration, rotary atomization, extrusion, prilling, spheronization, size reduction methods, drum granulation, and/or high shear granulation.

Examples of commercially available phytases include Bio-Feed^{™} Phytase (Novozymes), Ronozyme^{™} P (DSM Nutritional Products), Natuphos^{™} (BASF), Finase^{™} (AB Enzymes), and the Phyzyme^{™} product series (Danisco). Other preferred phytases include those described in WO 98/28408, WO 00/43503, and WO 03/066847.

In the present context a phytase is an enzyme which catalyzes the hydrolysis of phytate (myo-inositol hexakisphosphate) to (1) myo-inositol and/or (2) mono-, di-, tri-, tetra- and/or pentaphosphates thereof and (3) inorganic phosphate.

According to the ENZYME site referred to above, different types of phytases are known: A so-called 3-phytase (myo-inositol hexaphosphate 3-phosphohydrolase, EC 3.1.3.8) and a so-called 6-phytase (myo-inositol hexaphosphate 6-phosphohydrolase, EC 3.1.3.26). For the purposes of the present invention, both types are included in the definition of phytase.

For the purposes of the present invention phytase activity may be, preferably is, determined in the unit of FYT, one FYT being the amount of enzyme that liberates 1 micro-mol inorganic ortho-phosphate per min. under the following conditions: pH 5.5; temperature 37°C; substrate: sodium phytate (C₆H₆O₂₄P₆Na₁₂) in a concentration of 0.0050 mol/l. Suitable phytase assays are described in Example 1 of WO 00/20569. FTU is for determining phytase activity in feed and premix. In the alternative, the same extraction principles as described in Example 1, e.g. for endoglucanase and xylanase measurements, can be used for determining phytase activity in feed and premix.

Examples of phytases are disclosed in WO 99/49022 (Phytase variants), WO 99/48380, WO 00/43503 (Consensus phytases), EP 0897010 (Modified phytases), EP 0897985 (Consensus phytases).

Phytases may also be obtained from, e.g., the following:
i. *Ascomycetes,* such as those disclosed in EP 684313 or US 6139902; *Aspergillus awamori* PHYA (SWISSPROT P34753, Gene 133:55-62 (1993)); *Aspergillus niger* (*ficuum*) PHYA (SWISSPROT P34752, Gene 127:87-94 (1993), EP 420358); *Aspergillus awamori* PHYB (SWISSPROT P34755, Gene 133:55-62 (1993)); *Aspergillus niger* PHYB (SWISSPROT P34754, Biochem. Biophys. Res. Commun. 195:53-57(1993)); *Emericella nidulans* PHYB (SWISSPROT 000093, Biochim. Biophys. Acta 1353:217-223 (1997));
ii. *Thermomyces* or *Humicola,* such as the *Thermomyces lanuginosus* phytase disclosed in WO 97/35017;
iii. *Basidiomycetes,* such as *Peniophora* (WO 98/28408 and WO 98/28409);
iv. Other fungal phytases such as those disclosed in JP 11000164 (*Penicillium* phytase), or WO98/1348 (*Monascus anka* phytase);
v. *Bacillus,* such as *Bacillus subtilis* PHYC (SWISSPROT 031097, Appl. Environ. Microbiol. 64:2079-2085 (1998)); *Bacillus sp.* PHYT (SWISSPROT 066037, FEMS Microbiol. Lett. 162:185-191 (1998); *Bacillus subtilis* PHYT_(SWISSPROT P42094, J. Bacteriol. 177:6263-6275 (1995)); the phytase disclosed in AU 724094, or WO 97/33976;
vi. *Escherichia coli* (US 6110719);
vii. *Schwanniomyces occidentalis* (US 5830732);
viii. a phytase having an amino acid sequence of at least 75% identity to a (mature) amino acid sequence of a phytase of (i)-(vii); or
ix. a phytase encoded by a nucleic acid sequence which hybridizes under low stringency conditions with a mature phytase encoding part of a gene corresponding to a phytase of (i)-(vii);
x. a variant of the phytase of (i)-(vii) comprising a substitution, deletion, and/or insertion of one or more amino acids;
xi. an allelic variant of (i)-(vii);
xii. a fragment of (i), (ii), (iii), (iv), (vi) or (vii) that has phytase activity; or
xiii. a synthetic polypeptide designed on the basis of (i)-(vii) and having phytase activity.

Other relevant phytases for use according to the invention are various variants of the *Peniophora lycii* phytase (mature peptide corresponding to amino acids 31-225 of SEQ ID NO: 15). These variants are disclosed in WO 2003 66847.

It has been found that by coating the granules of the present invention with a salt coating it is possible to keep more than 50% of activity of the active compound present in the core, more than 60%, such as more than 70%, and even more than 75% of activity after steam pelleting at 100°C at 60 seconds.

In a particular embodiment of the present invention the retained activity of the active compound present in the core of the granules in the steam treated pelletized feed composition is at least 75% of the activity of the active compound in the core of the granules before steam pelleting.

In a particular embodiment of the present invention the retained activity of the active compound present in the core of the granules to be used for steam treated pelletized feed compositions is at least 75% of the activity of the active compound in the core of the granules before steam pelleting.

In a particular embodiment of the present invention the activity of the active compound is at least 75% of the original activity of the active compound present in the core of the granules before steam treatment and pelletizing the composition.

### Phytase activity analysis:

Method: Phytase splits phytic acid into phosphate, released phosphate is reacted with vanadium and molydenium oxides into a colored (yellow) complex. Absorbance is measured at 415 nm.

Unit: 1 FTU = amount of enzyme which at standard conditions (as given below) releases phosphate equivalent to 1 µM phosphate per minute.

### Buffers:

Extraction buffer: 0.01 % Tween 20 (polyoxyethylene sorbitan monolaurate)

Substrate: 5 mM phytic acid, 0.22M acetate (sodium acetate/acetic acid), pH 5.5.
Reagent: 5 mM ammonium vanadate, 20 mM ammonium heptamolybdate tetrahydrate, 40 mM ammonia, 2.4M nitric acid

### Procedure:

Extraction of feed: 50 g feed is extracted in 500 ml extraction buffer for 1 hour. Eventual further dilution in extraction buffer if the activity is higher than 2.5 FTU/g feed. (Detection level is 0.1 FTU/g feed). The sample is centrifuged (15 minutes at 4000 rpm). 300 µl supernatant is mixed with 3 ml substrate and reacted for 60 minutes at 37 degree C. 2 ml reagent is added. Samples are centrifuged (10 minutes at 4000 rpm.). Absorbance at 415 nm is measured. Activity is determined relative to a standard curve prepared with KH₂PO₄.

Reference is made to WO 2003/66847.

In a particular embodiment of the present invention the feed composition of example 1 is used when determining the activity of the active compound. In a more particular embodiment of the present invention the feed composition of example 2 is used when determining the activity of the active compound.

### Materials suitable as binders:

Binders of the present invention can be synthetic polymers, waxes including fats, fermentation broth, carbohydrates, salts or polypeptides.

### Synthetic polymers

By synthetic polymers is meant polymers which backbone has been polymerised synthetically. Suitable synthetic polymers of the invention includes in particular polyvinyl pyrrolidone (PVP), polyvinyl alcohol (PVA), polyvinyl acetate, polyacrylate, polymethacrylate, poly-acrylamide, polysulfonate, polycarboxylate, and copolymers thereof, in particular water soluble polymers or copolymers.
In a particular embodiment of the present invention the synthetic polymer is a vinyl polymer.

### Waxes

A "wax" in the context of the present invention is to be understood as a polymeric material having a melting point between 25 -150 °C.

Examples of waxes are the following:
- Poly ethylene glycols, PEG. Different PEG waxes are commercially available having different molecular sizes, wherein PEG's with low molecular sizes also have low melting points. Examples of suitable PEG's are PEG 1500, PEG 2000, PEG 3000, PEG 4000, PEG 6000, PEG 8000, PEG 9000 etc. e.g. from BASF (Pluriol E series) or from Clariant or from Ineos. Derivatives of Poly ethylene glycols may also be used.
- polypropylens (e.g. polypropylen glycol Pluriol P series from BASF) or polyethylens or mixtures thereof. Derivatives of polypropylenes and polyethylenes may also be used.
- Polymers of ethyleneoxide, propyleneoxide or copolymers thereof are useful, such as in block polymers, e.g. Pluronic PE 6800 from BASF. Derivatives of ethoxylated fatty alcohols.
- Waxes isolated from a natural source, such as Carnauba wax (melting point between 80-88°C), Candelilla wax (melting point between 68-70°C) and bees wax. Other natural waxes or derivatives thereof are waxes derived from animals or plants, e.g. of marine origin. Hydrogenated plant oil or animal tallow. Examples of such waxes are hydrogenated ox tallow, hydrogenated palm oil, hydrogenated cotton seeds and/or hydrogenated soy bean oil, wherein the term "hydrogenated" as used herein is to be construed as saturation of unsaturated carbohydrate chains, e.g. in triglycerides, wherein carbon=carbon double bonds are converted to carbon-carbon single bonds. Hydrogenated palm oil is commercially available e.g. from Hobum Oele und Fette GmbH - Germany or Deutche Cargill GmbH - Germany.
- Fatty acid alcohols, such as the linear long chain fatty acid alcohol NAFOL 1822 (C18, 20, 22) from Condea Chemie GMBH - Germany, having a melting point between 55-60°C. Derivatives of fatty acid alcohols.
- Mono-glycerides and/or di-glycerides, such as glyceryl stearate, wherein stearate is a mixture of stearic and palmitic acid, are useful waxes. An example of this is Dimodan PM - from Danisco Ingredients, Denmark.
- Fatty acids, such as hydrogenated linear long chained fatty acids and derivatives of fatty acids.
- Paraffines, i.e. solid hydrocarbons.
- Micro-crystalline wax.

### Fermentation broth

A fermentation broth in accordance with the invention comprises microbial cells and/or cell debris thereof (biomass).

In a preferred embodiment the fermentation broth comprises at least 10% of the biomass, more preferably at least 50%, even more preferably at least 75% and most preferably at least 90% or at least 95% of the biomass originating from the fermentation. In another preferred embodiment the broth contains 0-31 % w/w dry matter, preferably 0-20% w/w, more preferably 0-15% w/w such as 10-15% w/w dry matter, 0% dry matter being excluded from said ranges. The biomass may constitute up to 90% w/w of the dry matter, preferably up to 75% w/w, more preferably up to 50% w/w of the dry matter, while the enzyme may constitute up to 50% w/w of the dry matter, preferably up to 25% w/w, more preferably up to 10% w/w of the dry matter.

### Polysaccharides

The polysaccharides of the present invention may be un-modified naturally occurring polysaccharides or modified naturally occurring polysaccharides.

Suitable polysaccharides include cellulose, pectin, dextrin and starch. The starches may be soluble or insoluble in water.

In a particular embodiment of the present invention the polysaccharide is a starch. In a particular embodiment of the present invention the polysaccharide is an insoluble starch.

Naturally occurring starches from a wide variety of plant sources are suitable in the context of the invention (either as starches per se, or as the starting point for modified starches), and relevant starches include starch from: rice, corn, wheat, potato, oat, cassava, sago-palm, yuca, barley, sweet potato, sorghum, yams, rye, millet, buckwheat, arrowroot, taro, tannia, and may for example be in the form of flour.

Cassava starch is among preferred starches in the context of the invention; in this connection it may be mentioned that cassava and cassava starch are known under various synonyms, including tapioca, manioc, mandioca and manihot.

As employed in the context of the present invention, the term "modified starch" denotes a naturally occurring starch, which has undergone some kind of at least partial chemical modification, enzymatic modification, and/or physical or physicochemical modification, and which - in general - exhibits altered properties relative to the "parent" starch.

In a particular embodiment of the present invention the granule comprise a polysaccharide.

### Salts

The core may comprise a salt. The salt may be an inorganic salt, e.g. salts of sulfate, sulfite, phosphate, phosphonate, nitrate, chloride or carbonate or salts of simple organic acids (less than 10 carbon atoms e.g. 6 or less carbon atoms) such as citrate, malonate or acetate. Examples of cations in these salt are alkali or earth alkali metal ions, although the ammonium ion or metal ions of the first transition series, such as sodium, potassium, magnesium, calcium, zinc or aluminium. Examples of anions include chloride, iodide, sulfate, sulfite, bisulfite, thiosulfate, phosphate, monobasic phosphate, dibasic phosphate, hypophosphite, dihydrogen pyrophosphate, carbonate, bicarbonate, metasilicate, citrate, malate, maleate, malonate, succinate, lactate, formate, acetate, butyrate, propionate, benzoate, tartrate, ascorbate or gluconate. In particular alkali- or earth alkali metal salts of sulfate, sulfite, phosphate, phosphonate, nitrate, chloride or carbonate or salts of simple organic acids such as citrate, malonate or acetate may be used. Specific examples include NaH₂PO₄, Na₂HPO₄, Na₃PO₄, (NH₄)H₂PO₄, K₂HPO₄, KH₂PO₄, Na₂SO₄. K₂SO₄, KHSO₄, ZnSO₄, MgSO₄, CuSO₄, Mg(NO₃)₂, (NH₄)₂SO₄, sodium borate, magnesium acetate and sodium citrate.

The salt may also be a hydrated salt, i.e. a crystalline salt hydrate with bound water(s) of crystallization, such as described in WO 99/32595. Examples of hydrated salts include magnesium sulfate heptahydrate (MgSO₄(7H₂O)), zinc sulfate heptahydrate (ZnSO₄(7H₂O)), sodium phosphate dibasic heptahydrate (Na₂HPO₄(7H₂O)), magnesium nitrate hexahydrate (Mg(NO₃)₂(6H₂O)), sodium borate decahydrate, sodium citrate dihydrate and magnesium acetate tetrahydrate.

In a particular embodiment of the present invention the binder is a polypeptide. The polypeptide may be selected from gelatin, collagen, casein, chitosan, poly aspartic acid and poly glutamatic acid. In another particular embodiment the binder is a cellulose derivative such as hydroxypropyl cellulose, methyl cellulose or CMC. A suitable binder is a carbohydrate binder such as dextrin e.g Glucidex 21D or Avedex W80.

### Moisture absorbing materials:

We have found that some granules which are coated with salt have a significant decrease in stability per se. The salt work as a moisture barrier, and if the core is not dry enough prior to coating with the salt, moisture is trapped within the core and can affect the activity of the active compound negatively. We have found that by adding a moisture absorbing compound either to the core and/or to the coating we can solve said problem. In some cases it can be solved by drying the core thoroughly before applying the salt coating.

The moisture absorbing material is present in the granule as a buffer which is able of decreasing water activity within the core by removing free water in contact with the active compound after application of the salt coating. If the moisture absorbing material is added to the core, it is important that there is excessive buffer capacity present after application of the salt coating to remove the water present. The moisture absorbing compound has a water uptake of more than 3%, more than 5%, such as more than 10%. The water uptake is found as the equilibrium water uptake at 25°C and 70% relative humidity after one week. The amount of moisture absorbing compound added to the granule is more than 1%, more than 2%, more than 5%, even more than 10% w/w.

The moisture absorbing materials can be both organic and inorganic compounds and can be but is not limited to the group consisting of flour, starch, corn cob products, cellulose and silica gel.

### Additional granulation materials:

The granule may comprise additional materials such as fillers, fibre materials, stabilizing agents, solubilising agents, suspension agents, viscosity regulating agents, light spheres, plasticizers, salts, lubricants and fragrances.

### Fillers

Suitable fillers are water soluble and/or insoluble inorganic salts such as finely ground alkali sulphate, alkali carbonate and/or alkali chloride, clays such as kaolin (e.g. SPESWHITE™, English China Clay), bentonites, talcs, zeolites, chalk, calcium carbonate and/or silicates. Typical fillers are di-sodium sulphate and calcium-lignosulphonate. Other fillers are silica, gypsum, kaolin, talc, magnesium aluminium silicate and cellulose fibres.

### Fibre materials

Pure or impure cellulose in fibrous form such as sawdust, pure fibrous cellulose, cotton, or other forms of pure or impure fibrous cellulose. Also, filter aids based on fibrous cellulose can be used. Several brands of cellulose in fibrous form are on the market, e.g. CEPO™ and ARBOCELL™. Pertinent examples of fibrous cellulose filter aids are ARBOCELL BFC 200™ and ARBOCELL BC 200™. Also synthetic fibres may be used as described in EP 304331 B1.

### Stabilizing agents

Stabilising or protective agents such as conventionally used in the field of granulation. Stabilising or protective agents may fall into several categories: alkaline or neutral materials, reducing agents, antioxidants and/or salts of first transition series metal ions. Each of these may be used in conjunction with other protective agents of the same or different categories. Examples of alkaline protective agents are alkali metal silicates, carbonates or bicarbonates. Examples of reducing protective agents are salts of sulfite, thiosulfite, thiosulfate or MnSO₄ while examples of antioxidants are methionine, butylated hydroxytoluene (BHT) or butylated hydroxyanisol (BHA). In particular stabilising agents may be salts of thiosulfates, e.g. sodium thiosulfate or methionine. Still other example of useful stabilizers are gelatine, urea, sorbitol, glycerol, casein, Poly vinyl pyrrolidone (PVP), hydroxypropylmethylcellulose (HPMC), carboxymethyl cellulose (CMC), hydroxyethylcellulose (HEC), powder of skimmed milk and/or edible oils, such as soy oil or canola oil. Particular stabilizing agents in feed granules are a lactic acid source or starch. In a particular embodiment of the present invention the granule comprise a lactic acid source according to patent application no. EP 1,117,771 which is hereby incorporated as reference. A preferred lactic acid source is corn steep liquor. It is also well known in the art that enzyme substrates such as starch, lipids, proteins etc can act as stabilizers for enzymes.

### Solubilising agents

As is known by the person skilled in the art, many agents, through a variety of methods, serve to increase the solubility of formulations, and typical agents known to the art can be found in National Pharmacopeia's.

### Light spheres:

Light spheres are small particles with low true density. Typically, they are hollow spherical particles with air or gas inside. Such materials are usually prepared by expanding a solid material. These light spheres may be inorganic of nature or organic of nature. Polysaccharides are preferred, such as starch or derivatives thereof. Biodac® is an example of non-hollow lightweight material made from cellulose (waste from papermaking), available from GranTek Inc. These materials may be included in the granules of the invention either alone or as a mixture of different light materials.

### Suspension agents:

Suspension agents, mediators and/or solvents may be incorporated.

### Viscosity regulating agents:

Viscosity regulating agents may be present.

### Plasticizers:

Plasticizers of the present invention include, for example: polyols such as sugars, sugar alcohols, glycerine, glycerol trimethylol propane, neopentyl glycol, triethanolamine, mono-, di- and triethylene glycol or polyethylene glycols (PEGs) having a molecular weight less than 1000; urea and water.

### Lubricants:

As used in the present context, the term "lubricant" refers to any agent, which reduces surface friction, lubricates the surface of the granule, decreases tendency to build-up of static electricity, and/or reduces friability of the granules. Lubricants can serve as anti-agglomeration agents and wetting agents. Examples of suitable lubricants are lower polyethylene glycols (PEGs) and mineral oils. The lubricant is particularly a mineral oil or a nonionic surfactant, and more particularly the lubricant is not miscible with the other materials.

### The salt coating

The granule of the present invention comprise besides a core at least one coating which is here to be understood as the layer surrounding the core.

The coating which comprises a salt, may in a particular embodiment of the present invention comprise at least 60% w/w, e.g. 65% w/w or 70% w/w salt, which in particular may be at least 75% w/w, e.g. at least 80% w/w, at least 85% w/w, e.g. at least 90% w/w or at least 95% w/w, even at least 99% w/w.

In a particular embodiment of the present invention the amount of salt in the coating of the granule constitute at least 60% w/w of the coating.

In a particular embodiment of the present invention the amount of salt in the coating of the granules in the steam treated pelletized feed composition constitutes at least 60% w/w of the coating.

The amount of salt in the coating of the the granules to be used for steam treated pelletized feed compositions constitutes at least 60% w/w of the coating.

Depending on the size of the core material the coating may be applied in 1-200% w/w of the weight of the coated granule to obtain a desired size of the coated granule. Usually coatings constitute 5-150% w/w, particularly 10-100% w/w, even more particular 20-80% w/w, most particularly 40-60% w/w of the coated granule. However in some cases particularly when using small core sizes the coating may constitute as much as 15-50% or even 50-75% w/w of the coated granule.

The effect of the salt coating depends on the thickness of the coating. An increased coating thickness provides a better protection of the active compound, but at the same time result in increased manufacturing costs.

To be able to provide acceptable protection the salt coating preferably have a certain thickness. In a particular embodiment of the present invention the salt coating is at least 1 µm thick. In a more particular embodiment the thickness of the salt coating is at least 2 µm. In an even more particular embodiment the total thickness of the salt coating is at least 4 µm. In a most particular embodiment the total thickness of the salt coating is at least 8 µm. The thicker the coating the more time consuming and expensive it gets to produce the granule. In a particular embodiment of the present invention the thickness of the salt coating is below 100 µm. In a more particular embodiment the thickness of the salt coating is below 60 µm. In an even more particular embodiment the total thickness of the salt coating is below 40 µm.

In a particular embodiment of the present invention the thickness of the salt coating of the granule of the present invention is at least 8 µm.

In a particular embodiment of the present invention the thickness of the salt coating of the steam treated pelletized feed composition is at least 8 µm.

In a particular embodiment of the present invention the thickness of the salt coating of the granules to be used for steam treated pelletized feed compositions is at least 8 µm.

In one embodiment the coated granule is a granule according to WO 01/25412, where the core unit is smaller than cores known to the art and the coating is thicker than coatings known to the art. For such granules the ratio between the diameter of the coated granule and the diameter of the core unit (abbreviated DG/DC) for this type of granules will usually be DG/DC is at least 1.1, particularly at least 1.5, more particularly at least 2, more particularly at least 2.5, more particularly at least 3, most particularly at least 4. DG/DC is however particularly below about 100, particularly below about 50, more particularly below 25, and most particularly below 10. A particularly range for DG/DC is about 4 to about 6. Thus for such granules the thickness of the coating should be at least 25 µm. A particular thickness is at least 50 µm such as at least 75 µm, at least 100 µm, at least 150 µm, at least 200 µm, at least 250 µm or particularly at least 300 µm. The thickness of this kind of coating is usually below 800 µm. A particular thickness is below 500 µm such as below 350 µm, below 300 µm, below 250 µm, below 200 µm, below 150 µm or particularly below 80 µm.

The coating should encapsulate the core unit by forming a substantially continuous layer. A substantially continuous layer is to be understood in the present invention as a coating having few or none holes, so that the core unit it is encapsulating has few or none uncoated areas. The layer or coating should in particular be homogenous in thickness.

The salt to be added is preferably in the form of a salt solution or a salt suspension wherein the fine particles is less than 5 µm, such as less than 1 µm.

In a particular embodiment of the present invention it is preferred to use a solution of salt as salt coating, but if the used salts have low solubility it can be preferable to use a suspension of salt instead of a solution, to be able to add more salt pr. litre liquid added to the granules. In a particular embodiment of the present invention the salt coating is prepared in accordance with the coating in WO 03/55967.

### Salts:

Referring to the salt in the salt coating it can either be one particular salt or a mixture of salts. The salt used is Na₂SO₄.

It has however surprisingly been found that some hydrated salts have a negative influence on the stability of the granules per se and on the pelleting stability. Questionable hydrated salts are salts comprising water molecules which can separate from the salt after application of the salt coating and thereafter migrate into the core where a water sensitive active compound is present. In a particular embodiment of the present invention the coating does not comprise a hydrated salt. In a more particular embodiment of the present invention the coating does not comprise a salt comprising more than four water molecules at 50°C.

### Additional coatings

The granules of the present invention may comprise one, two or more additional coating layers on the inside or outside surface of the protective coating according to the invention.

Additional coatings may be applied to the granule to provide additional characteristics or properties. Thus, for example, an additional coating may achieve one or more of the following effects:
(i) reduction of the dust-formation tendency of a granule;
(ii) protection of the active compound in the granule against hostile compounds in the surroundings.
(iii) dissolution at a desired rate upon introduction of the granule into a liquid medium (such as an acid medium);
(iv) provide a better physical strength of the granule.

Additional conventional coating(s) of desired properties may be applied and examples of conventional coating materials and coating methods is, *inter alia,* described in US 4,106,991, EP 170360, EP 304332, EP 304331, EP 458849, EP 458845, WO 97/39116, WO 92/12645, WO 89/08695, WO 89/08694, WO 87/07292, WO 91/06638, WO 92/13030, WO 93/07260, WO 93/07263, WO 96/38527, WO 96/16151, WO 97/23606, US 5,324,649, US 4,689,297, EP 206417, EP 193829, DE 4344215, DE 4322229 A, DD 263790, JP 61162185 A, JP 58179492 or PCT/DK/01/00628.

### Additional Coating materials:

The coating may comprise additional coating materials such as binders, fillers, fibre materials, enzyme stabilizing agents, solubilising agents, suspension agents, viscosity regulating agents, light spheres, plasticizers, salts, lubricants and fragrances as mentioned in the section "additional granulation materials" above. Further coating ingredients may be pigments.

### Pigments

Suitable pigments include, but are not limited to, finely divided whiteners, such as titanium dioxide or kaolin, coloured pigments, water soluble colorants, as well as combinations of one or more pigments and water soluble colorants.

Optionally, the granules can be coated with a coating mixture.

In a particular embodiment of the present invention the granule of the present invention further comprise a lactic acid source.

In a particular embodiment of the present invention the granule of the steam treated pelletized feed composition comprises a lactic acid source.

In a particular embodiment of the present invention the granule to be used for steam treated pelletized feed compositions comprises a lactic acid source.

In a particular embodiment of the present invention the granule of the present invention further comprise dry matter of corn steep liquor.

In a particular embodiment of the present invention the granule of the steam treated pelletized feed composition comprises dry matter of corn steep liquor.

In a particular embodiment of the present invention the granule to be used for steam treated pelletized feed compositions comprises dry matter of corn steep liquor.

### Preparation of the core

The core an active compound in the form of concentrated dry matter. The concentrated dry matter can be but is not limited to the preparation by spray drying.

Methods for preparing the core can be found in Handbook of Powder Technology; Particle size enlargement by C. E. Capes; Volume 1; 1980; Elsevier. Preparation methods include known feed and granule formulation technologies, i.e.:
a) Spray dried products, wherein a liquid active compound-containing solution is atomized in a spray drying tower to form small droplets which during their way down the drying tower dry to form an active compound-containing particulate material. Very small particles can be produced this way (Michael S. Showell (editor); Powdered detergents; Surfactant Science Series; 1998; vol. 71; page 140-142; Marcel Dekker).
b) Layered products, wherein the active compound is coated as a layer around a pre-formed inert core particle, wherein an active compound-containing solution is atomized, typically in a fluid bed apparatus wherein the pre-formed core particles are fluidized, and the active compound-containing solution adheres to the core particles and dries up to leave a layer of dry active compound on the surface of the core particle. Particles of a desired size can be obtained this way if a useful core particle of the desired size can be found. This type of product is described in e.g. WO 97/23606
c) Absorbed core particles, wherein rather than coating the active compound as a layer around the core, the active compound is absorbed onto and/or into the surface of the core. Such a process is described in WO 97/39116.
d) Extrusion or pelletized products, wherein an active compound-containing paste is pressed to pellets or under pressure is extruded through a small opening and cut into particles which are subsequently dried. Such particles usually have a considerable size because of the material in which the extrusion opening is made (usually a plate with bore holes) sets a limit on the allowable pressure drop over the extrusion opening. Also, very high extrusion pressures when using a small opening increase heat generation in the active compound paste, which is harmful to the active compound. (Michael S. Showell (editor); Powdered detergents; Surfactant Science Series; 1998; vol. 71; page 140-142; Marcel Dekker)
e) Prilled products, wherein an active powder is suspended in molten wax and the suspension is sprayed, e.g. through a rotating disk atomiser, into a cooling chamber where the droplets quickly solidify (Michael S. Showell (editor); Powdered detergents; Surfactant Science Series; 1998; vol. 71; page 140-142; Marcel Dekker). The product obtained is one wherein the active compound is uniformly distributed throughout an inert material instead of being concentrated on its surface. Also US 4,016,040 and US 4,713,245 are documents relating to this technique
f) Mixer granulation products, wherein an active-containing liquid is added to a dry powder composition of conventional granulating components. The liquid and the powder in a suitable proportion are mixed and as the moisture of the liquid is absorbed in the dry powder, the components of the dry powder will start to adhere and agglomerate and particles will build up, forming granulates comprising the active compound. Such a process is described in US 4,106,991 (NOVO NORDISK) and related documents EP 170360 B1 (NOVO NORDISK), EP 304332 B1 (NOVO NORDISK), EP 304331 (NOVO NORDISK), WO 90/09440 (NOVO NORDISK) and WO 90/09428 (NOVO NORDISK). In a particular product of this process wherein various high-shear mixers can be used as granulators, granulates consisting of enzyme as active compound, fillers and binders etc. are mixed with cellulose fibres to reinforce the particles to give the so-called T-granulate. Reinforced particles, being more robust, release less enzymatic dust.
g) Size reduction, wherein the cores are produced by milling or crushing of larger particles, pellets, tablets, briquettes etc. containing the active material. The wanted core particle fraction is obtained by sieving the milled or crushed product. Over and undersized particles can be recycled. Size reduction is described in (Martin Rhodes (editor); Principles of Powder Technology; 1990; Chapter 10; John Wiley & Sons).
h) Fluid bed granulation. Fluid bed granulation involves suspending particulates in an air stream and spraying a liquid onto the fluidized particles via nozzles. Particles hit by spray droplets get wetted and become tacky. The tacky particles collide with other particles and adhere to them and form a granule.
i) The cores may be subjected to drying, such as in a fluid bed drier. Other known methods for drying granules in the feed or enzyme industry can be used by the skilled person. The drying preferably takes place at a product temperature of from 25 to 90°C. For some active compounds it is important the cores comprising the active compound contain a low amount of water before coating with the salt. If water sensitive active compounds are coated with a salt before excessive water is removed, it will be trapped within the core and it may affect the activity of the active compound negatively. After drying, the cores preferably contain 0.1-10 % w/w water.

### Preparation of the salt coating

The salt coating may be applied onto the core granule comprising the active compound by atomization onto the core granules in a fluid bed, the salt coating may further be applied in vacuum mixers, drageé type coaters (pan-drum coaters), equipment for coating of seeds, equipment comprising rotating bottoms (eks. Roto Glatt, CF granulators (Freund), torbed processors (Gauda) or in rotating fluid bed processors such as Omnitex (Nara).

After applying the salt layer the granule may optionally be dried. The drying of the salt coated granule can be achieved by any drying method available to the skilled person, such as spray-drying, freeze drying, vacuum drying, fluid bed drying, pan drum coating and microwave drying. Drying of the salt coated granule can also be combined with granulation methods which comprise e.g. the use of a fluid bed, a fluid bed spray dryer (FSD) or a Multi-stage dryer (MSD).

### Preparation of additional coating

Conventional coatings and methods as known to the art may suitably be used, such as the coatings described in Danish PA 2002 00473, WO 89/08694, WO 89/08695, 270 608 B1 and/or WO 00/01793. Other examples of conventional coating materials may be found in US 4,106,991, EP 170360, EP 304332, EP 304331, EP 458849, EP 458845, WO 97/39116, WO 92/12645A, WO 89/08695, WO 89/08694, WO 87/07292, WO 91/06638, WO 92/13030, WO 93/07260, WO 93/07263, WO 96/38527, WO 96/16151, WO 97/23606, WO 01/25412, WO 02/20746, WO 02/28369, US 5879920, US 5,324,649, US 4,689,297, US 6,348,442, EP 206417, EP 193829, DE 4344215, DE 4322229 A, DE 263790, JP 61162185 A and/or JP 58179492.

The coating may be prepared by the same methods as mentioned above in the section "Preparation of the core" and "Preparation of the salt coating".

The granules obtained can be subjected to rounding off (e.g. spheronisation), such as in a Marumeriser ^{™}, or compaction.

The granules can be dried, such as in a fluid bed drier. Other known methods for drying granules in the feed or enzyme industry can be used by the skilled person. The drying preferably takes place at a product temperature of from 25 to 90°C.

### Manufacturing of feed pellets

In the manufacturing of feed pellets it is preferred to involve steam treatment prior to pelleting, a process called conditioning. In the subsequent pelleting step the feed is forced through a die and the resulting strands are cut into suitable pellets of variable length. During this conditioning step the process temperature may rise to 60-100°C.

The feed mixture is prepared by mixing the granules comprising the active compound with desired feed components. The mixture is led to a conditioner e.g. a cascade mixer with steam injection. The feed is in the conditioner heated up to a specified temperature, 60-100°C, e.g. 60°C, 70°C, 80°C, 90°C or 100°C by injecting steam, measured at the outlet of the conditioner. The residence time can be variable from seconds to minutes and even hours. Such as 5 seconds, 10 seconds, 15 seconds, 30 seconds, 1 minute, 2 minutes, 5 minutes, 10 minutes, 15 minutes, 30 minutes and 1 hour. In a particular embodiment of the present invention the temperature is 100°C and the residence time is 60 seconds.

In a particular embodiment of the present invention the process temperature during steam treatment is at least 60°C. In a more particular embodiment of the present invention the process temperature during steam treatment is at least 70°C. In an even more particular embodiment of the present invention the process temperature during steam treatment is at least 80°C. In a most particular embodiment of the present invention the process temperature during steam treatment is at least 90°C.

From the conditioner the feed is led to a press e.g. a Simon Heesen press, and pressed to pellets with variable length e.g. 15 mm. After the press the pellets are placed in an air cooler and cooled for a specified time e.g. 15 minutes.

### Animal Feed

The granule of the present invention is suitable for use in animal feed compositions. The granule is mixed with feed substances. The characteristics of the granule allows its use as a component of a composition which is well suited as an animal feed, which is steam treated and subsequently pelletized.

The term animal includes all animals. Examples of animals are non-ruminants, and ruminants, such as cows, sheep and horses. In a particular embodiment, the animal is a non-ruminant animal. Non-ruminant animals include mono-gastric animals, e.g. pigs or swine (including, but not limited to, piglets, growing pigs, and sows); poultry such as turkeys and chicken (including but not limited to broiler chickens, layers); young calves; and fish (including but not limited to salmon).

The term feed or feed composition means any compound, preparation, mixture, or composition The feed of the present invention may comprise vegetable proteins. The term vegetable proteins as used herein refers to any compound, composition, preparation or mixture that includes at least one protein derived from or originating from a vegetable, including modified proteins and protein-derivatives. In particular embodiments, the protein content of the vegetable proteins is at least 10, 20, 30, 40, 50, or 60% (w/w).

Vegetable proteins may be derived from vegetable protein sources, such as legumes and cereals, for example materials from plants of the families *Fabaceae* (*Leguminosae*), *Cruciferaceae, Chenopodiaceae,* and *Poaceae*, such as soy bean meal, lupin meal and rapeseed meal.

In a particular embodiment, the vegetable protein source is material from one or more plants of the family *Fabaceae*, e.g. soybean, lupine, pea, or bean.

In another particular embodiment, the vegetable protein source is material from one or more plants of the family *Chenopodiaceae,* e.g. beet, sugar beet, spinach or quinoa.

Other examples of vegetable protein sources are rapeseed, and cabbage.

Soybean is a preferred vegetable protein source.

Other examples of vegetable protein sources are cereals such as barley, wheat, rye, oat, maize (corn), rice, and sorghum.

Suitable animal feed additives are enzyme inhibitors, fat-soluble vitamins, water soluble vitamins, trace minerals and macro minerals.

Further, optional, feed-additive ingredients are colouring agents, aroma compounds, stabilisers, antimicrobial peptides, and/or at least one other enzyme selected from amongst phytases EC 3.1.3.8 or 3.1.3.26; xylanases EC 3.2.1.8; galactanases EC 3.2.1.89; and/or beta-glucanases EC 3.2.1.4.

Examples of anti microbial peptides (AMP's) are CAP18, Leucocin A, Tritrpticin, Protegrin-1, Thanatin, Defensin, Ovispirin such as Novispirin (Robert Lehrer, 2000), and variants, or fragments thereof which retain antimicrobial activity.

Examples of anti fungal polypeptides (AFP's) are the *Aspergillus giganteus,* and *Aspergillus niger* peptides, as well as variants and fragments thereof which retain antifungal activity, as disclosed in WO 94/01459 and PCT/DK02/00289.

Usally fat- and water-soluble vitamins, as well as trace minerals form part of a so-called premix intended for addition to the feed, whereas macro minerals are usually separately added to the feed.

The following are non-exclusive lists of examples of these components:
Examples of fat-soluble vitamins are vitamin A, vitamin D3, vitamin E, and vitamin K, e.g. vitamin K3.
Examples of water-soluble vitamins are vitamin B12, biotin and choline, vitamin B1, vitamin B2, vitamin B6, niacin, folic acid and panthothenate, e.g. Ca-D-panthothenate.
Examples of trace minerals are manganese, zinc, iron, copper, iodine, selenium, and cobalt. Examples of macro minerals are calcium, phosphorus and sodium.

In still further particular embodiments, the animal feed composition of the invention contains 0-80% maize; and/or 0-80% sorghum; and/or 0-70% wheat; and/or 0-70% Barley; and/or 0-30% oats; and/or 0-40% soybean meal; and/or 0-10% fish meal; and/or 0-20% whey.

The present invention is further described by the following examples which should not be construed as limiting the scope of the invention.

### EXAMPLES

### Example 1

### Granule 1:

5 kg Na₂SO₄ cores sieved to 180-250 microns was loaded into a Niro MP-1 top-spray fluid bed. The following mixture was coated onto the cores:

| | |
|---|---|
| 450 g | Phytase concentrate |
| 50 g | Dextrin, Avedex W80 |
| 265 g | Corn steep liquor powder |
| 265 g | Wheat starch |
| 3300 g | Water |

### Granule 2:

3.0 kg of granule 1 was loaded into a Niro MP-1 top-spray fluid bed. The following mixture was coated onto the cores:

| | |
|---|---|
| 1200 g | Na₂SO₄ |
| 50 g | Dextrin, Avedex W80 |
| 3200 g | Water |

### Granule 3:

3.0 kg of granule 1 was loaded into a MP-1 top spray fluid bed. The following mixture was coated onto the cores:

| | |
|---|---|
| 1200 g | MgSO₄·7H₂O |
| 50 g | Dextrin, Avedex W80 |
| 2000 g | Water |

Magnesium sulfate is after coating still hydrated with at least 6 water molecules

The following bed settings were used during coating of granule 1, 2 and 3:
Air flow: 175 kg/h
Inlet air temperature: 80°C
Product temperature: 42-46°
1.2 mm nozzle
3.6 bar nozzle pressure
After coating the granules were dried to a product temperature of 60°C

### Granule 4:

Small phytase cores was prepared by spray drying and subsequently coated.

Spray-feed 1 (sulfate suspension kept at 45-50 °C):
14560 g Na₂SO4
3200 g Talc (magnesium silicate)
2080 g Dextrin, Avedex W80
12160 g Water

Spray feed 2 (enzyme solution kept at 20-25°C):
19840 g Phytase concentrate
4800 g Corn steep liquor powder
4800 g Wheat starch
2560 g Water

The two spray-feeds were dosed via peristaltic pumps at a rate of 500 g/minutes and mixed in a static mixer just before entering the spray-dryer (Bontech 1038DAN). The inlet air temperature in the spray dryer was 140°C and the outlet powder temperature 44-46°C.

The powder was sieved between 125 and 180 microns.
3 kg sieved cores were coated on the MP-1 with the following mixture:

| | |
|---|---|
| 3045 g | Na₂SO₄ |
| 105 g | Dextrin, Avedex W80 |
| 7350 g | Water |

During this coating the following fluid bed setting was used:
Air flow: 80-110 kg/h
Inlet air temperature = 70-90°C
Product temperature 40-43°
1.2 mm nozzle
3.0 bar nozzle pressure
After coating the products were dried to a product temperature of 60°C

The particles were enlarged by spraying the following dispersion onto the salt coated cores in the MP-1:
10451 g Na₂SO₄
968 g Precipitated CaCO₃ (PCC)
581 g Dextrin, Avedex W80
7353 g Water

During this enlargement the following fluid bed setting was used:
Air flow: 110-130 kg/h
Inlet air temperature = 80-92°C
Product temperature 39-41°C
1.2 mm nozzle
3.6 bar nozzle pressure
After coating the products were dried to a product temperature of 60°C

### Granule 5:

A feed granulate was produced as described in WO 92/12645 example 2 (T-granulate, however with phytase concentrate and using hydrogenated palm oil as coating material instead of hydrogenated beef tallow).

### Measurements of pelleting stability

Granule 1 to 5 were pelletized using very harsh conditions.

### Experimental set-up:

Approximately 50 g enzyme granulate was pre-mixed with 10 kg feed for 10 minutes in a small horizontal mixer. This premix was mixed with 90 kg feed for 10 minutes in a larger horizontal mixer. From the mixer the feed was led to the conditioner (a cascade mixer with steam injection) at a rate of approximately 300 kg/hour. The conditioner heated up the feed to 100°C (measured at the outlet) by injecting steam. The residence time in the conditioner was 60-70 seconds. From the conditioner the feed was led to a Simon Heesen press equipped with 3.0x35 mm horizontal die and pressed to pellets with a length of around 15 mm. After the press the pellets were placed in an air cooler and cooled for 15 minutes.

### Feed formulation:

74.0 % Grind wheat
20.7 % Toasted soy grits
5.0 % Soy oil
0.3 % Solivit Mikro 106 (commercial mixture of minerals and vitamins from Løvens Kemiske Fabrik, Denmark)
Water content: 12.0%

The activity of the ingoing enzyme granulates and the activities of the final pellets were analyzed and from these figures the residual activity was calculated. The figures were corrected for the blind levels of phytase in a feed sample without enzyme before and after pelleting. Pelleting trial results:

| Formulation | Comprrising | | Particle size, microns | % residual activity |
|---|---|---|---|---|
| Product 1 | Granule 1 | uncoated | 273 | 51 |
| Product 2 | Granule 2 | Na₂SO₄ | 299 | 77 |
| Product 3 | Granule 3^{**} | MgSO₄·7H₂O | 508^{*} | 64 |
| Product 4 | Granule 4 | Na₂SO₄ | 233 | 81 |
| Product 5 | Granule 5 | wax coated | 500 | 71 |

| | | | | |
|---|---|---|---|---|
| ^{*} The large particle size is due to agglomeration occurring during the salt coating. The "primary" particles are around 300 microns. ^{**} Reference Example | | | | |

From the results it is evident that a salt coating is improving pelleting stability significantly. The sodium sulfate coating is somewhat more efficient than the magnesium sulfate heptahydrate coating. The stability of the sodium sulfate coated granulates are better than that of the wax coated granules.

### Example 2

### Granule 6:

4 kg Na₂SO₄ cores sieved to 180-250 microns was loaded into a MP-1 top spray fluid bed and coated with:

| | |
|---|---|
| 500 g | Phytase concentrate |
| 40 g | Dextrin, Avedex W80 |
| 210 g | Corn steep liquor powder |
| 210 g | Wheat starch |
| 2300 g | Water |

### Granule 7:

3 kg granule 6 was coated on the MP-1 with:

| | |
|---|---|
| 1200 g | Na₂SO₄ |
| 50 g | Dextrin, Avedex W80 |
| 3200 g | Water |

### Granule 8:

4 kg Na₂SO₄ cores sieved to 180-250 microns was loaded into a MP-1 top spray fluid bed and coated with:

| | |
|---|---|
| 640 g | Phytase concentrate |
| 40 g | Dextrin, Avedex W80 |
| 210 g | Corn steep liquor powder |
| 210 g | Wheat starch |
| 2200 g | Water |

### Granule 9:

3 kg granule 8 was loaded into a MP-1 top spray fluid bed and coated with:

| | |
|---|---|
| 2400 g | Na₂SO₄ |
| 100 g | Dextrin, Avedex W80 |
| 6400 g | Water |

### Granule 10:

4 kg Na₂SO₄ cores sieved to 180-250 microns was loaded into a MP-1 top spray fluid bed and coated with:

| | |
|---|---|
| 550 g | Phytase concentrate |
| 40 g | Dextrin, Avedex W80 |
| 210 g | Corn steep liquor powder |
| 210 g | Wheat starch |
| 500 g | Grinded Farigel (gelatinized flour from Westhove) |
| 2200 g | Water |

### Granule 11:

3 kg of granule 10 was loaded into the MP-1 and coated with:

| | |
|---|---|
| 1200 g | Na₂SO₄ |
| 50 g | Dextrin, Avedex W80 |
| 3200 g | Water |

### Granule 12:

3 kg of granule 6 was loaded into the MP-1 and coated with:

| | |
|---|---|
| 1200 g | (NH₄)₂SO₄ |
| 2000 g | Water |

The following fluid bed setting was used above when coating enzyme onto the cores:
Air flow: 220 kg/h
Inlet air temperature = 70°C
Product temperature 42-46°C
1.2 mm nozzle
3.0 bar nozzle pressure
After coating the products were dried to a product temperature of 60°C.

The following fluid bed setting was used above when coating with salt onto the enzyme:
Air flow: 270 kg/h
Inlet air temperature = 90°C
Product temperature 45-55°C
1.2 mm nozzle
3.0 bar nozzle pressure
After coating the products were dried to a product temperature of 60°C

### Pelleting stability

Product 6, 7, 8, 9 and 10 comprising granule 7, 9, 11, 12 and 5 respectively were pelletized using the conditions given in example 1, except that the water content in the feed was lowered to 10.1 % by drying of the ingoing wheat (giving somewhat less harsh pelleting conditions)

| Product | Comprising | | Particle size, microns | % residual activity |
|---|---|---|---|---|
| Product 6 | Granule 7 | Na₂SO₄ | 336 | 89 |
| Product 7 | Granule 9 | Na₂SO₄ | 433 | 91 |
| Product 8 | Granule 11 | Na₂SO₄ | 346 | 88 |
| Product 9 | Granule 12^{**} | (NH₄)₂SO₄ | 469^{*} | 81 |
| Product 10 | Granule 5 | wax | 500 | 73 |

| | | | | |
|---|---|---|---|---|
| ^{*} The large particle size is due to agglomeration occurring during the salt coating. The primary particles are around 340 microns. ^{**}Referential Example | | | | |

From the experiments it is clear that a salt coating improve pelleting stability significantly, and the stability is better than that of known wax coated granules.

## Claims

1. A method for manufacturing a feed composition comprising the steps of:
i. mixing feed components with granules comprising a core and a coating, wherein the core comprises a phytase,
ii. steam treating said composition (i), and
iii. pelleting said composition (ii),
**characterized in that** the coating comprises at least 60% w/w of a salt, wherein the salt is Na₂SO₄, and wherein the granules do not further comprise a wax coating.

2. The method of Claim 1, wherein the thickness of the salt coating is at least 8 µm.

3. The method of any preceding claim, wherein the coating comprises at least 80% w/w of the salt.

4. The method of any of Claims 1 to 3, wherein the coating comprises at least 90% w/w of the salt.

5. The method of any of Claims 1 to 3, wherein the coating comprises at least 95% wlw of the salt.

6. The method of any of Claims 1 to 5, wherein the coating constitutes 20-80% w/w of the coated granule.

7. The method of any of Claims 1 to 6, wherein the phytase is a 6-phytase.

8. The method of any of Claims 1 to 6, wherein the phytase is an *Escherichia coli* phytase.

9. The method of any of Claims 1 to 8, wherein the steam treatment consists in heating the feed mixture to 60-100°C by injecting steam.

10. A feed composition obtainable by the method of any one of Claims 1 to 9.

11. Use of granules comprising a core comprising a phytase and a coating for the manufacture of a steam treated pelletized feed composition, **characterised in that** the coating comprises at least 60% w/w of a salt, wherein the salt is Na₂SO₄, and wherein the granules do not comprise a wax coating.

## Patentansprüche

1. Verfahren zur Herstellung einer Futterzusammensetzung, umfassend die Stufen:
i. Mischen von Futterkomponenten mit Körnern, die einen Kern und einen Überzug umfassen, wobei der Kern eine Phytase umfasst,
ii. Behandeln der Zusammensetzung (i) mit Wasserdampf und
iii. Pelletisieren der Zusammensetzung (ii),
**dadurch gekennzeichnet, dass** der Überzug mindestens 60 % (Gew./Gew.) an einem Salz umfasst, wobei das Salz Na₂SO₄ ist, und wobei die Körner nicht des Weiteren einen Wachsüberzug umfassen.

2. Verfahren nach Anspruch 1, wobei die Dicke des Salzüberzugs mindestens 8 µm beträgt.

3. Verfahren nach einem der vorhergehenden Ansprüche, wobei der Überzug mindestens 80 % (Gew./Gew.) an dem Salz umfasst.

4. Verfahren nach einem der Ansprüche 1 bis 3, wobei der Überzug mindestens 90 % (Gew./Gew.) an dem Salz umfasst.

5. Verfahren nach einem der Ansprüche 1 bis 3, wobei der Überzug mindestens 95 % (Gew./Gew.) an dem Salz umfasst.

6. Verfahren nach einem der Ansprüche 1 bis 5, wobei der Überzug 20-80 % (Gew./Gew.) des überzogenen Korns ausmacht.

7. Verfahren nach einem der Ansprüche 1 bis 6, wobei die Phytase eine 6-Phytase ist.

8. Verfahren nach einem der Ansprüche 1 bis 6, wobei die Phytase eine *Escherichia coli*-Phytase ist.

9. Verfahren nach einem der Ansprüche 1 bis 8, wobei die Wasserdampfbehandlung darin besteht, das Futtergemisch durch Injizieren von Wasserdampf auf 60-100 °C zu erhitzen.

10. Futterzusammensetzung, die durch das Verfahren nach einem der Ansprüche 1 bis 9 erhalten werden kann.

11. Verwendung von Körnern, die einen eine Phytase umfassenden Kern und einen Überzug umfassen, zur Herstellung einer wasserdampfbehandelten pelletisierten Futterzusammensetzung, **dadurch gekennzeichnet, dass** der Überzug mindestens 60 % (Gew./Gew.) an einem Salz umfasst, wobei das Salz Na₂SO₄ ist und wobei die Körner keinen Wachsüberzug umfassen.

## Revendications

1. Procédé de fabrication d'une composition d'alimentation comprenant les étapes de :
i. mélange de composants alimentaires avec des granules comprenant un noyau et un enrobage, dans lesquelles le noyau comprend une phytase,
ii. traitement à la vapeur de ladite composition (i), et
iii. pastillage de ladite composition (ii), **caractérisé en ce que** l'enrobage comprend au moins 60% m/m d'un sel, dans lequel le sel est le Na₂SO₄, et dans lequel les granules ne comprennent pas en outre un enrobage de cire.

2. Procédé selon la revendication 1, dans lequel l'épaisseur de l'enrobage de sel est d'au moins 8 µm.

3. Procédé selon l'une quelconque des revendications précédentes, dans lequel l'enrobage comprend au moins 80% m/m du sel.

4. Procédé selon l'une quelconque des revendications 1 à 3, dans lequel l'enrobage comprend au moins 90% m/m du sel.

5. Procédé selon l'une quelconque des revendications 1 à 3, dans lequel l'enrobage comprend au moins 95% m/m du sel.

6. Procédé selon l'une quelconque des revendications 1 à 5, dans lequel l'enrobage constitue 20 à 80% m/m du granule enrobé.

7. Procédé selon l'une quelconque des revendications 1 à 6, dans lequel la phytase est une 6-phytase.

8. Procédé selon l'une quelconque des revendications 1 à 6, dans lequel la phytase est une phytase d'*Escherichia coli*.

9. Procédé selon l'une quelconque des revendications 1 à 8, dans lequel le traitement à la vapeur consiste à chauffer le mélange d'alimentation à 60 à 100°C en injectant de la vapeur.

10. Composition d'alimentation que l'on peut obtenir par le procédé de l'une quelconque des revendications 1 à 9.

11. Utilisation de granules comprenant un noyau comprenant une phytase et un enrobage pour la fabrication d'une composition d'alimentation pastillée traitée à la vapeur, **caractérisée en ce que** l'enrobage comprend au moins 60% m/m d'un sel, dans laquelle le sel est du Na₂SO₄, et dans laquelle les granules ne comprennent pas d'enrobage de cire.
